# EUROPÄISCHE PATENTANMELDUNG

(11) **EP 0 670 200 A1**
(43) Veröffentlichungstag der Anmeldung: **06.09.1995**
(21) Anmeldenummer: 95102049.4
(22) Anmeldetag: 15.02.1995
(51) Int. Cl.: B25C 1/18, F16B 19/14

(54) **Mit Bolzen bestückbares Magazin für ein pulverkraftbetriebenes Setzgerät**

(30) Priorität: 01.03.1994 DE 4406556
(71) Anmelder: Beto-Tornado GmbH, D-44379 Dortmund (DE)
(72) Erfinder: Rogowski, Zbigniew, Dipl.-Ing., 92-413 Lodz (PL)
(74) Vertreter: Sparing - Röhl - Henseler Patentanwälte

(57) **Zusammenfassung**

Die Erfindung betrifft ein mit Bolzen (2) bestückbares Magazin für ein pulverkraftbetriebenes Setzgerät, bei dem die Bolzen (2) mittels eines durch hochgespannte Gase beaufschlagten Kolbens eingetrieben werden, wobei die Bolzen (2) während des Eintreibvorgangs durch eine den Bolzenschaft (3) umschließende, vordere Führungsbuchse (4) geführt sind, wobei ein Bolzenhalter (1) vorgesehen ist, der in Längsrichtung eine Durchschiebeausnehmung (5) besitzt, die die Bolzen (2) mit der jeweiligen Führungsbuchse (4) versehen einzeln und lose aufnimmt und führt, wobei die Führungsbuchse (4) einen den Bolzenschaft (3) mit Spiel umgebenden, zylindischen Abschnitt (14) umfaßt, der an einem Ende mit einer Stirnwandung (15) versehen ist, die mit einer den Bolzenschaft (3) klemmenden Durchtrittsöffnung (16) versehen ist, wobei der zylindrische Abschnitt (14) einen Innendurchmesser aufweist, der die Aufnahme eines Gewindekopfes (13) eines Gewindebolzens (2) und das Hindurchtreten eines Bolzenkopfes (11) eines Kopfbolzens (2) ermöglicht.

## Beschreibung

Die Erfindung betrifft ein mit Bolzen bestückbares Magazin für ein pulverkraftbetriebenes Setzgerät.

Aus DE-A-3 608 146 ist ein pulverkraftbetriebenes Setzgerät bekannt, das mit einem damit fest verbundenen Magazin versehen ist, das Kopfbolzen einzeln und lose aufnimmt, führt und mittels Federkraft in Richtung auf das Mündungsteil des Setzgerätes drückt. Das Magazin besitzt eine abnehmbare Seitenwand, so daß es hierüber mit Kopfbolzen bestückbar ist. Die Kopfbolzen tragen eine Führungsbuchse, die eng am Schaft des Kopfbolzens anliegt und an beiden Stirnseiten jeweils mit einem radial vorstehenden Führungsring versehen ist. Im Magazin sind beidseitig Stützleisten angeordnet, die zwischen den Führungsringen aufgenommen werden und damit zur Führung der Kopfbolzen dienen. Dieses Magazin eignet sich jedoch nicht dazu, außer Kopfbolzen auch Gewindebolzen aufzunehmen, d.h. mit unterschiedlichen Bolzentypen bestückt zu werden.

Ferner ist aus EP-B-0 330 953 ein Magazin bekannt, das aus miteinander zu einem flexiblen Magazinstreifen über Stege verbundenen Führungsbuchsen besteht, die jeweils einen Kopfbolzen aufnehmen. Beim Eintreiben eines Bolzens wird jeweils eine Führungsbuchse im Setzgerät vom Magazinstreifen abgetrennt. Die Trennung kann bei einem derartigen Magazin aber auch unbeabsichtigt erfolgen. Außerdem ist die vorgesehene Anzahl, gewöhnlich zehn Bolzen, entweder zu verbrauchen oder der Rest ist wegzuwerfen.

Ein ähnliches Magazin ist aus EP-A-0 237 476 bekannt, bei dem Führungsbuchsen die Bolzen über zwei endseitige ringförmige Bereiche halten, deren Durchtrittsöffnung quadratisch ist. Jedoch werden hierdurch die obigen Nachteile nicht beseitigt.

Bei dem aus DE-C-2 042 769 bekannten Magazin ist ein flacher, mit Sollbruchstellen versehener Bandstreifen vorgesehen, dessen Abschnitte jeweils einen Bolzen am Bolzenschaft einklemmend und führend aufnehmen. Ein derartiges Magazin besitzt ebenfalls die obigen Nachteile.

Das aus DE-C-1 939 801 bekannte Magazin umfaßt Führungshülsen mit über Stege miteinander verbundenen Führungsringen und besitzt daher ebenfalls die genannten Nachteile.

Aufgabe der Erfindung ist es daher, ein mit Bolzen bestückbares Magazin für ein pulverkraftbetriebenes Setzgerät zu schaffen, das es ermöglicht, sowohl Kopf- als auch Gewindebolzen aufzunehmen.

Diese Aufgabe wird durch ein Bolzen bestückbares Magazin für ein pulverkraftbetriebenes Setzgerät, bei dem die Bolzen mittels eines durch hochgespannte Gase beaufschlagten Kolbens eingetrieben werden, wobei die Bolzen während des Eintreibvorgangs durch eine den Bolzenschaft umschließende, vordere Führungsbuchse geführt sind, wobei ein Bolzenhalter vorgesehen ist, der in Längsrichtung eine Durchschiebeausnehmung besitzt, die die Bolzen mit der jeweiligen Führungsbuchse versehen einzeln und lose aufnimmt und führt, wobei die Führungsbuchse einen den Bolzenschaft mit Spiel umgebenden, zylindischen Abschnitt umfaßt, der an einem Ende mit einer Stirnwandung versehen ist, die mit einer den Bolzenschaft klemmenden Durchtrittsöffnung versehen ist, wobei der zylindrische Abschnitt einen Innendurchmesser aufweist, der die Aufnahme eines Gewindekopfes eines Gewindebolzens und das Hindurchtreten eines Bolzenkopfes eines Kopfbolzens ermöglicht, gelöst.

Hierdurch läßt sich das Magazin sowohl mit Kopf- als auch Gewindebolzen nach Bedarf bestücken und nichtverbrauchte Bolzen sind wiederverwendbar. Das Magazin ist wenig störanfällig.

Um ein Magazin mit einfachen, wenig störanfälligem Aufbau zu schaffen, das auswechselbar und ferner entsprechend dem Bedarf bestückbar ist bzw. die Entnahme und Wiederverwendung von unverbrauchten Bolzen ermöglicht, ist ferner ein mit Bolzen bestückbares Magazin vorgesehen, das in ein pulverkraftbetriebenes Setzgerät einsetzbar ist, bei dem die Bolzen mittels eines durch hochgespannte Gase beaufschlagten Kolbens eingetrieben werden, wobei die Bolzen während des Eintreibvorgangs durch eine den Bolzenschaft umschließende, vordere Führungsbuchse geführt sind, wobei ein quaderförmiger Bolzenhalter vorgesehen ist, der in Längsrichtung eine Durchschiebeausnehmung besitzt, die die Bolzen mit der jeweiligen Führungsbuchse versehen einzeln und lose aufnimmt und führt, wobei der Bolzenhalter zu einer Schmalseite hin einen durchgehenden Durchtrittsschlitz für die Bolzenschäfte aufweist, der zum Verhindern des Herausfallens der Bolzen an beiden Enden verengt ist.

Dieses Magazin eignet sich insbesondere für eine Ausbildung zur Aufnahmemöglichkeit von Kopf- als auch Gewindebolzen.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

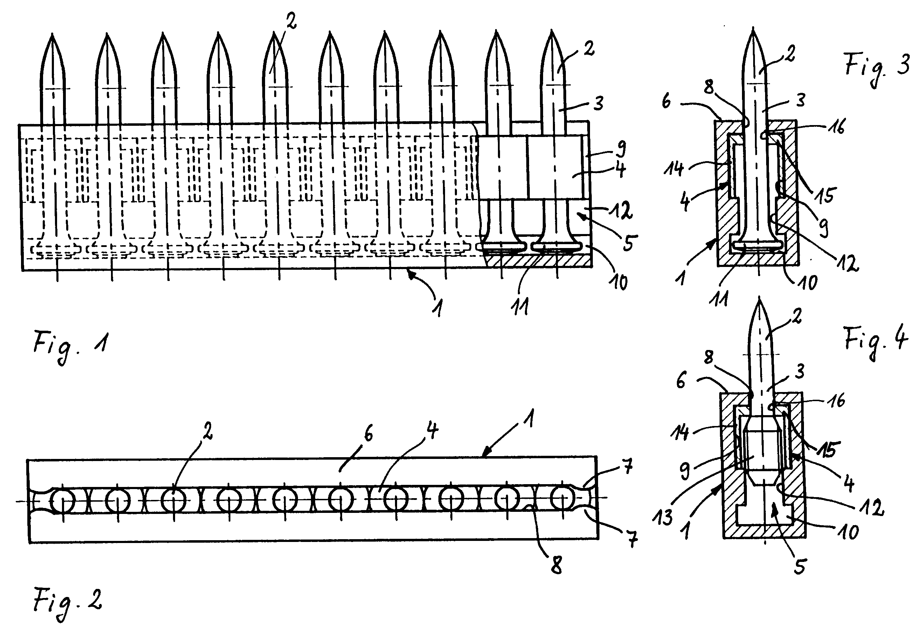

Fig. 1 zeigt teilweise im Schnitt eine Seitenansicht eines mit Bolzen bestückten Magazins für ein pulverkraftbetriebenes Setzgerät.

Fig. 2 zeigt das Magazin von Fig. 1 in Draufsicht.

Fig. 3 zeigt das Magazin von Fig. 1 im Querschnitt mit einem Kopfbolzen.

Fig. 4 zeigt das Magazin von Fig. 1 im Querschnitt mit einem Gewindebolzen.

Das dargestellte Magazin für ein pulverkraftbetriebenes Setzgerät umfaßt einen langgestreckten, quaderförmigen, insbesondere aus Kunststoff bestehenden Bolzenhalter 1, der zur Aufnahme einer Reihe von einzelnen, metallischen Bolzen 2 geeignet ist, deren Schaft 3 jeweils eine aus Kunststoff bestehende Führungsbuchse 4 trägt, wobei die die Führungsbuchsen 4 tragenden Bolzen 2 unabhängig voneinander und lose aufgenommen werden. Die Führungsbuchse 4 dient dazu, daß beim Eintreiben des zugehörigen Bolzens 2 mittels eines durch hochgespannte Gase beaufschlagten Kolbens den Bolzen 2 zu führen.

Der Bolzenhalter 1 besitzt zur Aufnahme der die Führungsbuchsen 4 tragenden Bolzen 2 in Längsrichtung eine an beiden Enden offene Durchschiebeausnehmung 5, die zu einer Schmalseite 6 des Bolzenhalters 1 hin einen durchgehenden, an beiden Enden durch einwärts gerichtete, gerundete Vorsprünge 7 verengten Durchtrittsschlitz 8 für die Bolzenschäfte 3 aufweist. Die Vorsprünge 7 spreizen sich beim Hindurchführen von Bolzen 2 elastisch auf und sichern ansonsten die Bolzen 2 gegen Herausfallen.

Die Durchschiebeausnehmung 5 weist benachbart zu dem Durchtrittsschlitz 8 einen Führungsabschnitt 9 für die Führungsbuchsen 4 auf, der letztere an beiden Stirnseiten - ebenso wie am Außenumfang - mit Spiel führt. Die Durchschiebeöffnung 5 weist ferner an der dem Durchtrittsschlitz 8 abgewandten Seite einen Aufnahmeabschnitt 10 für Bolzenköpfe 11 von Kopfbolzen 2 auf. Der Führungsabschnitt 9 und der Aufnahmeabschnitt 10 sind durch einen gegenüber diesen verengten Verbindungsabschnitt 12 miteinander verbunden, der vorzugsweise eine Breite aufweist, die dem Durchmesser eines Gewindekopfes 13 eines Gewindebolzens 2 entspricht.

Die als Rondellen ausgebildeten Führungsbuchsen 4 bestehen jeweils aus einem zylindischen Abschnitt 14, der an einem Ende mit einer Stirnwandung 15 versehen ist. Der zylindrische Abschnitt 14 besitzt einen Innendurchmesser, der so groß ist, daß der Bolzenschaft 3 mit Abstand aufgenommen wird, und insbesondere so groß ist, daß der Gewindekopf 13 (beispielsweise M6) mit Spiel aufgenommen wird, während die Stirnwandung 15 eine Durchtrittsöffnung 16 für den Bolzenschaft 3 aufweist, die diesen klemmend umgreift.

Die Stirnwandung 15 ist zum zuverlässigen achsparallelen Führen der Bolzen 2 in der Mündungsbohrung eines Setzgerätes zweckmäßigerweise entsprechend dick und zugleich an der Außenseite mit einem kreuzförmigen Einschnitt versehen, um außerdem dem Hindurchtreten des Bolzenkopfes 3, 13 beim Eintreiben einen möglichst geringen Widerstand entgegenzusetzen.

Zugleich kann die Innenbohrung des kreiszylindrischen Abschnitts 14 sich axial erstreckende Schwächungsbereiche aufweisen, die etwa benachbart zu den Enden des kreuzförmigen Einschnitts enden.

Der Bolzenhalter 1 läßt sich je nach Bedarf mit einer variablen Zahl von jeweils mit einer Führungsbuchse 4 versehenen Bolzen 2 bestücken und in ein Bolzensetzgerät zum Eintreiben der Bolzen mittels Pulverkraft einsetzen, wobei beim Eintreiben jeweils ein Bolzen 2 mit Führungsbuchse 4 im Bolzensetzgerät aus dem Bolzenhalter 1 herausgedrückt wird, und ist wiederverwendbar. Hierbei kann es sich um Gewindeoder Kopfbolzen 2 handeln. Auch können Gewindebolzen 2 mit verlängertem Gewindekopf 13 bzw. Bolzen 2 mit unterschiedlich langen Bolzenschäften 3 eingesetzt werden, ohne daß irgendwelche sonstigen Änderungen vorzunehmen wären.

Infolge der individuellen Aufnahme der Bolzen 2 bleibt das Magazin immer funktionsfähig und ist praktisch nicht störanfällig. Der beim Eintreiben der Bolzen 2 entstehende Abfall wird einerseits dadurch, daß alle Bolzen verwendet werden können, und andererseits dadurch, daß die Führungsbuchsen 4 relativ geringe Mengen an Material erfordern, gering gehalten.

Der an beiden Enden verengte Durchtrittsschlitz 8 verhindert ein Herausfallen der vom Bolzenhalter 1 aufgenommenen Bolzen 2. Dies kann jedoch auch durch entsprechenden Reibschluß zwischen den Führungsbuchsen 4 und dem Bolzenhalter 1 verhindert werden. Dies ist insofern vorteilhaft, als die Bolzenhalter 1 aus abgelängten Profilteilen gebildet werden können, allerdings ist dann eine größere Maßhaltigkeit erforderlich.

## Patentansprüche

1. Mit Bolzen (2) bestückbares Magazin für ein pulverkraftbetriebenes Setzgerät, bei dem die Bolzen (2) mittels eines durch hochgespannte Gase beaufschlagten Kolbens eingetrieben werden, wobei die Bolzen (2) während des Eintreibvorgangs durch eine den Bolzenschaft (3) umschließende, vordere Führungsbuchse (4) geführt sind, wobei ein Bolzenhalter (1) vorgesehen ist, der in Längsrichtung eine Durchschiebeausnehmung (5) besitzt, die die Bolzen (2) mit der jeweiligen Führungsbuchse (4) versehen einzeln und lose aufnimmt und führt, dadurch **gekennzeichnet,** daß die Führungsbuchse (4) einen den Bolzenschaft (3) mit Spiel umgebenden, zylindischen Abschnitt (14) umfaßt, der an einem Ende mit einer Stirnwandung (15) versehen ist, die mit einer den Bolzenschaft (3) klemmenden Durchtrittsöffnung (16) versehen ist, wobei der zylindrische Abschnitt (14) einen Innendurchmesser aufweist, der die Aufnahme eines Gewindekopfes (13) eines Gewindebolzens (2) und das Hindurchtreten eines Bolzenkopfes (11) eines Kopfbolzens (2) ermöglicht.

2. Magazin nach Anspruch 1, dadurch gekennzeichnet, daß der Bolzenhalter (1) quaderförmig ist.

3. Magazin nach Anspruch 1 oder 2, dadurch gekennzeichnet, daß die Durchschiebeausnehmung (5) einen verbreiterten Führungsabschnitt (9) für die Führungsbuchsen (4) aufweist, der diese an beiden Stirnseiten führt.

4. Magazin nach einem der Ansprüche 1 bis 3, dadurch gekennzeichnet, daß die Durchschiebeausnehmung (5) einen verbreiterten Aufnahmeabschnitt (10) für Bolzenköpfe (11) von Kopfbolzen (2) aufweist.

5. Magazin nach einem der Ansprüche 1 bis 4, dadurch gekennzeichnet, daß der Durchtrittsschlitz (8) zum Verhindern des Herausfallens der Bolzen (2) an beiden Enden verengt ist.

6. Magazin nach einem der Ansprüche 1 bis 5, dadurch gekennzeichnet, daß es in das Setzgerät einsetzbar ist.

7. Mit Bolzen (2) bestückbares Magazin, das in ein pulverkraftbetriebenes Setzgerät einsetzbar ist, bei dem die Bolzen (2) mittels eines durch hochgespannte Gase beaufschlagten Kolbens eingetrieben werden, wobei die Bolzen (2) während des Eintreibvorgangs durch eine den Bolzenschaft (3) umschließende, vordere Führungsbuchse (4) geführt sind, insbesondere nach Anspruch 1, dadurch **gekennzeichnet,** daß ein quaderförmiger Bolzenhalter (1) vorgesehen ist, der in Längsrichtung eine Durchschiebeausnehmung (5) besitzt, die die Bolzen (2) mit der jeweiligen Führungsbuchse (4) versehen einzeln und lose aufnimmt und führt, wobei der Bolzenhalter (1) zu einer Schmalseite (6) hin einen durchgehenden Durchtrittsschlitz (8) für die Bolzenschäfte (3) aufweist, der zum Verhindern des Herausfallens der Bolzen (2) an beiden Enden verengt ist.

8. Magazin nach Anspruch 7, dadurch gekennzeichnet, daß die Durchschiebeausnehmung (5) einen verbreiterten Führungsabschnitt (9) für die Führungsbuchsen (4) aufweist, der diese an beiden Stirnseiten führt.

9. Magazin nach Anspruch 7 oder 8, dadurch gekennzeichnet, daß die Durchschiebeausnehmung (5) einen verbreiterten Aufnahmeabschnitt (10) für Bolzenköpfe (11) von Kopfbolzen (2) aufweist.

10. Magazin nach einem der Ansprüche 7 bis 9, dadurch gekennzeichnet, daß der Durchtrittsschlitz (8) zum Verhindern des Herausfallens der Bolzen (2) an beiden Enden verengt ist.
